# EUROPEAN PATENT SPECIFICATION

(11) **EP 0 578 045 B1**
(45) Date of publication and mention of the grant of the patent: **12.01.2000**
(21) Application number: 93109933.7
(22) Date of filing: 22.06.1993
(51) Int. Cl.: G09B 7/06, G09B 5/06, G09B 5/02, G09B 5/12

(54) **An automatic system for teaching and for monitoring learning by real-time analysis of responses to questions**
Automatisches System zum Lehren und zur Lehrkontrolle durch die Realzeitauswertung der Antworten auf Fragen
Système automatique d'enseignement et de contrôle de son effet par l'analyse en temps réel des réponses à des questions

(30) Priority: 09.07.1992 IT TO920578
(43) Date of publication of application: 12.01.1994
(73) Proprietor: PROMETEO S.p.A., 10155 Torino (IT)
(72) Inventor: Capello, Giuseppe, I-10144 Torino (IT)
(74) Representative: Notaro, Giancarlo

(56) References cited:
- EP-A- 0 399 667
- EP-A- 0 526 979
- DE-A- 3 416 766
- FR-A- 2 688 327
- GB-A- 2 242 557

## Description

The present invention relates to an automatic system for teaching and for monitoring learning by real-time analysis of responses to questions, of the type indicated in the pre-characterising portion of appended claim 1. EP-A-0 399 667 discloses a system of such a type.

The invention has been devised by the Applicant with reference to a training course for woodland fire prevention operatives. However, it is generally applicable to any type of material to be taught.

Tests carried out by the Applicant have shown that teaching or training courses conducted in a traditional manner do not make it possible to obtain effective results when one or more of the following conditions are found:
- large number of learners;
- wide range of cultural levels of the learners;
- geographical position of the site of the course distant from places where the qualified teachers usually operate;
- long duration of the course.

In order to solve this problem the subject of the invention is an automatic system for training or teaching and for monitoring learning, having the features set forth in claim 1.

The expression "audio-visual reproduction means" is intended to refer both to audio-visual means such as video players, film projectors etc, and to solely visual communication means such as slide projectors, and solely sound communication means. In an exemplary embodiment devised by the Applicant, the audio-visual reproduction means comprise a video playback machine which permits a training film to be displayed, including lessons by qualified teachers (typically University teachers from different countries) with images for assisting understanding of the arguments presented. The film is stopped after a relatively short period of time (for example between thirty-five seconds and seven minutes) so as not to exceed the threshold of the attention span of the learners. The last part of each portion of the film provides a summary of arguments presented. Once the film has been stopped, the slide projector projects a slide carrying a question and a series (for example three) of possible responses. The learners are thus immediately put to a test of the degree of learning and are forced to maintain a high level of attention. Each learner from his terminal station, can communicate the chosen response to the processor.

The heart of the system according to the invention consists particularly in providing for real-time processing, by the processor, of the responses transmitted by the various terminal stations, and for the immediate display of the results. In the embodiment put into practice by the Applicant the students are followed by an operator who, however, is not a qualified teacher, but merely an assistant having the function of monitoring the starting and stopping of the audio-visual reproduction means as a function of the results of the responses. For example, if the percentage of incorrect responses is greater than a predetermined level, the assistant can repeat the portion of the lesson already followed, until an acceptable percentage of correct responses is obtained.

Naturally, it will also be possible to programme the processor for automatic monitoring of the starting and stopping of the audio-visual control means as a function of the results of the responses.

To the applicant's knowledge there has never previously been proposed a system of the above-described type including means for automatic analysis of the responses to questions.

From the preceding description it is evident that the system according to the invention makes it possible to keep the learners' attention constantly at a high level and constantly to monitor, during the progress of the course, the degree of learning by the learners so as to achieve, an efficient teaching of groups containing even a high number of learners, and even of a very different cultural level without the aid of qualified personnel.

The invention will now be described with reference to the attached drawings, in which:
Figure 1 is a schematic view which illustrates a system according to the invention;
Figure 2 illustrates a detail of Figure 1;
Figure 3 illustrates an example of a question card in association with three possible responses; and
Figure 4 is a block diagram which illustrates the succession of steps for which the system is programmed.

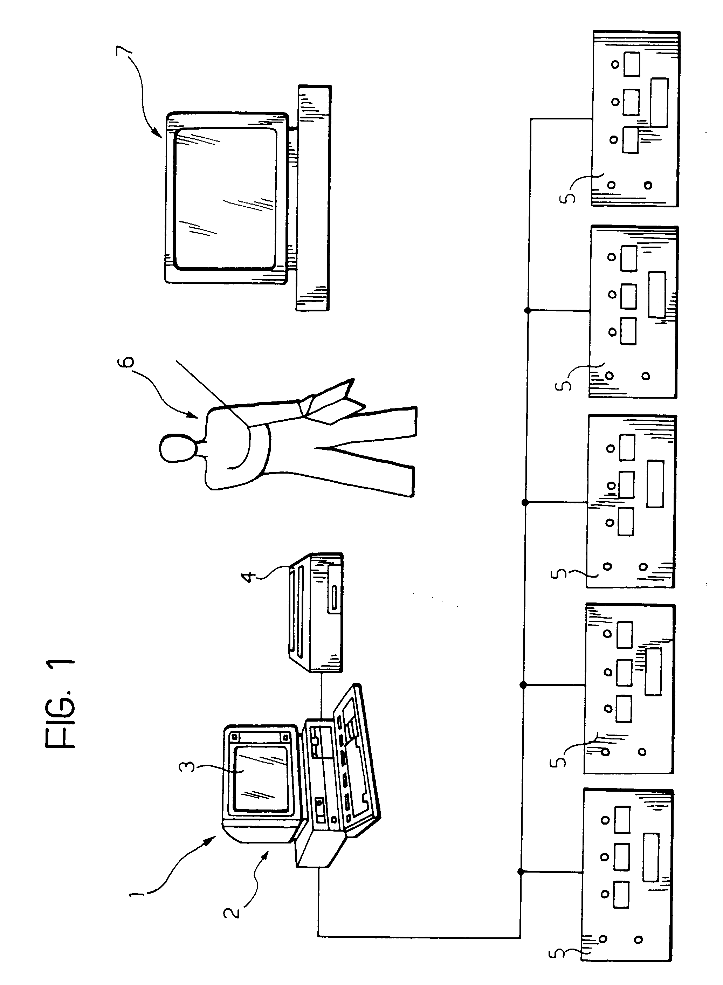

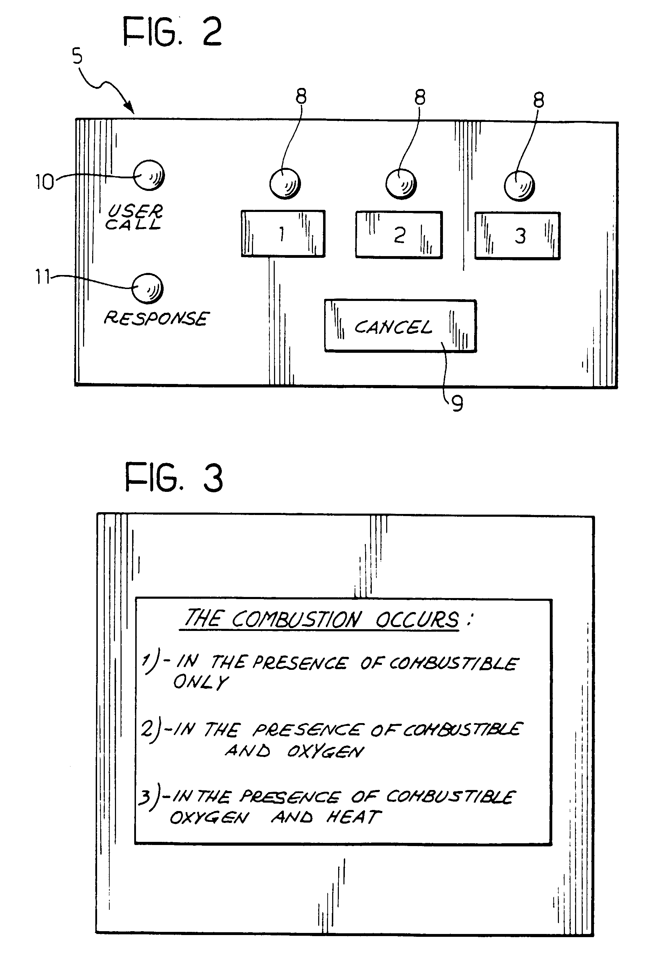

In Figure 1 the reference numeral 1 generally indicates the system according to the invention, comprising an electronic processor 2 connected to a video 3 and a printer 4, as well as to a plurality of terminal stations 5 each of which is intended to be associated with a student on the course. The reference numeral 7 indicates a video player which, in the illustrated example, is controlled by an operator 6. Still in the example illustrated, the operator 6 controls a slide projector (not illustrated in Figure 1) as well as the video player 7. As has been already indicated above, the video player 7 is intended to display a film utilised for teaching, including interviews with teachers, explanatory films and so on. The slide projector is, on the other hand, utilised, as indicated above, to project questions in association with a series of possible responses as in the example illustrated in Figure 3.

With reference to Figure 2, each terminal station 5 comprises a number of keys 8 equal to the number of possible responses (three in this example) which permit the learner to indicate the chosen response. The terminal station 5 further includes a key 9 to cancel the learner's choice, and two auxiliary illuminable indicators 10, 11 utilised at the discretion of the assistant, respectively to call the learner's attention and to indicate that the system is ready for the learner's response.

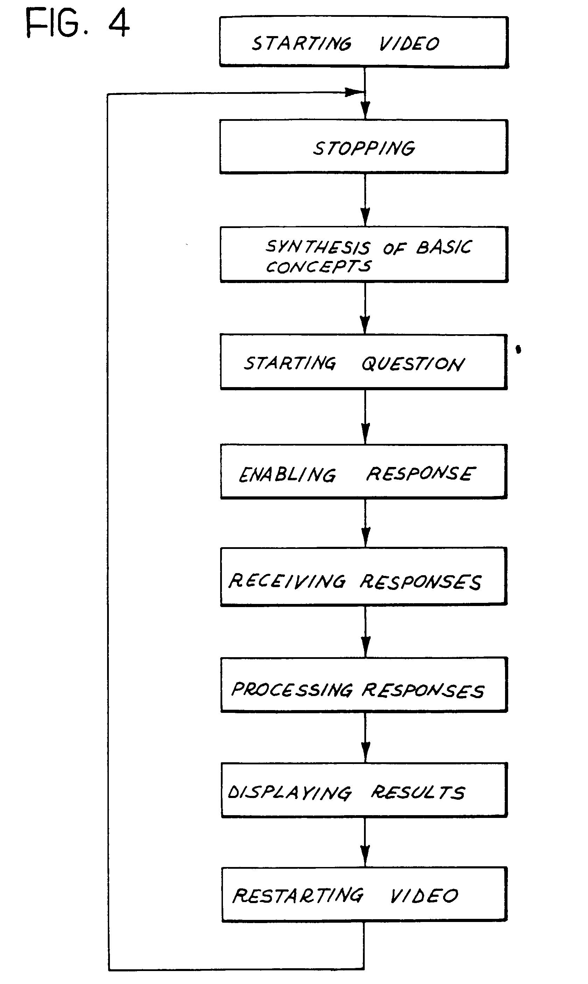

Figure 4 schematically indicates the sequence of operations performed by the system according to the invention as already illustrated.

## Claims

1. An automatic system for teaching and for monitoring learning, comprising:
a programmable electronic processor (2),
a plurality of terminal stations (5) connected to the electronic processor and each intended to be occupied by a learner,
in which each terminal station includes means (8) for making a choice between a plurality of options and for communicating this choice to the electronic processor (2),
audio-visual reproduction means (7) controlled by the electronic processor and/or by an operator (6) for reproducing, alternatively, audio-visual teaching message portions and questions for monitoring learning of each of said portions, in association with a plurality of possible responses for each of said question,
all being prearranged to perform the following operations cyclically:
- start the said audio-visual reproduction means (7) to send a teaching message portion,
- stop the reproduction means at the conclusion of said message portion,
- start the said audio-visual reproduction means to communicate a question relative to the reproduced portion in association with a series of possible responses for said question,
- enable the terminal stations (5) to select the correct response to the communicated question,
- receive the response sent from the terminal stations (5) and process them,
- display the results of the responses so as to allow an immediate check of the degree of learning achieved, and
- restart the said audio-visual reproduction means to communicate a further portion of teaching messages, cyclically repeating the above-described operations,
characterised in that the programmable electronic processor (2) is programmed so that it processes the responses sent from the terminal stations (5) in order to perform the following steps:
- calculate the percentage of wrong responses to each question,
- compare the calculated percentage with a predetermined threshold percentage value for that question, and
- automatically repeat the last reproduced audio-visual teaching message portion if the calculated percentage of wrong responses is higher than the relative threshold value, until the calculated percentage of wrong responses is lower than the predetermined threshold value for that question.

## Patentansprüche

1. Automatisches System zum Lehren und zur Lernkontrolle, enthaltend:
einen programmierbaren elektronischen Prozessor (2),
mehrere Endgeräte (5), die mit dem elektronischen Prozessor verbunden und jeweils für die Benutzung durch einen Lernenden vorgesehen sind,
wobei jedes Endgerät Mittel (8) für die Auswahl aus mehreren Optionen und zur Übermittlung dieser Wahl an den elektronischen Prozessor (2) enthält,
audiovisuelle Wiedergabemittel (7), gesteuert durch den elektronischen Prozessor und/oder durch einen Bediener (6) für das alternative Wiedergeben von audiovisuellen Lehrinhaltsabschnitten und Fragen für die Lernüberwachtung jedes dieser Abschnitte, in Zuordnung zu mehreren möglichen Antworten für jede dieser Fragen,
wobei alle vorarrangiert sind, um die folgenden Operationen zyklisch durchzuführen:
starte die audiovisuellen Wiedergabemittel (7), um einen Lehrinhaltsabschnitt zu senden,
halte die Wiedergabemittel am Ende des Inhaltsabschnitts an,
starte die audiovisuellen Wiedergabemittel, um eine Frage bezüglich des wiedergegebenen Abschnittes in Zuordnung zu einer Reihe von möglichen Antworten auf diese Frage zu übermitteln,
versetze das Endgerät (5) in die Lage, die richtige Antwort auf die übermittelte Frage auszuwählen,
empfange die von dem Endgerät (5) gesendeten Antworten und verarbeite sie,
stelle die Ergebnisse der Antworten so dar, daß eine sofortige Prüfung des Lernfortschrittsgrades ermöglicht wird, und
starte die audiovisuellen Wiedergabemittel erneut, um einen weiteren Lehrinhaltabschnitt zu übermitteln, wobei die oben beschriebenen Operationen zyklisch wiederholt werden,
dadurch gekennzeichnet, daß
der programmierbare elektronische Prozessor (2) derart programmiert ist, daß er die von den Endgeräten (5) gesendeten Antworten so verarbeitet, daß die folgenden Schritte durchgeführt werden:
berechne den Prozentsatz falscher Antworten auf jede Frage,
vergleiche den berechneten Prozentsatz mit einem vorbestimmten Prozentsatzschwellenwert für diese Frage, und
wiederhole automatisch den zuletzt wiedergegebenen audiovisuellen Lehrinhaltsabschnitt, wenn der berechnete Prozentsatz falscher Antworten größer ist als der diesbezügliche Schwellenwert, bis der berechnete Prozentsatz falscher Antworten niedriger ist als der vorbestimmte Schwellenwert für diese Frage.

## Revendications

1. Système automatique d'enseignement et de contrôle des connaissances des élèves, comprenant :
un dispositif de traitement électronique programmable (2),
plusieurs stations terminales (5) connectées au dispositif de traitement électronique et destinées chacune à être occupées par un élève,
où chaque station terminale comporte un moyen (8) permettant de faire un choix entre une pluralité d'options et de communiquer ce choix au dispositif de traitement électronique (2),
un moyen de reproduction audiovisuel (7) commandé par le dispositif de traitement électronique et, ou bien, par un opérateur (6) afin de reproduire, alternativement, des parties messages d'enseignement audiovisuels et des questions servant à contrôler la connaissance de chacune desdites parties, en association avec une pluralité de réponses possibles pour chacune desdites questions,
tout cela étant préarrangé pour permettre l'exécution cyclique des opérations suivantes :
- faire démarrer ledit moyen de reproduction audiovisuel (7) afin d'envoyer une partie message d'enseignement,
- arrêter le moyen de reproduction à la conclusion de ladite partie message,
- faire démarrer ledit moyen de reproduction audiovisuel pour transmettre une question se rapportant à la partie reproduite en association avec une série de réponses possibles à ladite question,
- permettre aux stations terminales (5) de sélectionner la réponse correcte à la question transmise,
- recevoir les réponses envoyées depuis les stations terminales (5) et les traiter,
- afficher les résultats des réponses de façon à permettre une vérification immédiate du degré de connaissance acquis, et
- faire redémarrer ledit moyen de reproduction audiovisuelle afin de transmettre une autre partie messages d'enseignement, en répétant cycliquement les opérations ci-dessus indiquées,
caractérisé en ce que ledit dispositif de traitement électronique programmable (2) est programmé de façon à traiter les réponses envoyées par les stations terminales (5) afin d'effectuer les opérations suivantes :
- calculer le pourcentage de réponses fausses à chaque question,
- comparer le pourcentage calculé avec une valeur de pourcentage de seuil prédéterminée pour cette question, et
- répéter automatiquement la dernière partie message d'enseignement audiovisuel reproduite si le pourcentage calculé de fausses réponses est supérieur à la valeur de seuil relative, jusqu'à ce que le pourcentage calculé de réponses fausses soit inférieur à la valeur de seuil prédéterminée pour cette question.
